# EUROPÄISCHE PATENTSCHRIFT

(11) **EP 2 475 444 B1**
(45) Veröffentlichungstag und Bekanntmachung des Hinweises auf die Patenterteilung: **08.10.2014**
(21) Anmeldenummer: 10754687.1
(22) Anmeldetag: 07.09.2010
(51) Int. Cl.: B01D 29/11, B01D 29/21, B01D 29/23, B01D 46/00, B01D 46/52

(54) **VERFAHREN ZUR HERSTELLUNG EINES FILTERELEMENTS MIT EINEM FILTERMEDIUM**
METHOD FOR PRODUCING A FILTER ELEMENT HAVING A FILTER MEDIUM
PROCÉDÉ DE FABRICATION D'UN ÉLÉMENT FILTRANT AVEC UN MILIEU FILTRANT

(30) Priorität: 12.09.2009 DE 102009041401
(43) Veröffentlichungstag der Anmeldung: 18.07.2012
(73) Patentinhaber: HYDAC FILTERTECHNIK GMBH, 66280 Sulzbach (DE)
(72) Erfinder: LAUER, Viktor, Josef, 66809 Nalbach (DE); KLEEMANN, Daniel, 66130 Saarbrücken (DE); DUCHOWSKI, John, Kazimierz, 66115 Saarbrucken (DE); OBERLI, Frank, CH-8193 Eglisau (CH)
(74) Vertreter: Bartels, Martin Erich Arthur
(86) Internationale Anmeldenummer: PCT/EP2010/005474
(87) Internationale Veröffentlichungsnummer: WO 2011/029568

(56) Entgegenhaltungen:
- EP-A2- 1 149 620
- US-A1- 2007 131 235
- US-A1- 2008 148 699

## Beschreibung

Die Erfindung betrifft ein Verfahren zur Herstellung eines zylinderförmigen oder ovalen Filterelements, bestehend aus einem ersten Filtermedium, das einzelne Filterfalten aufweist, und einem zweiten Filtermedium, das die Filterfalten zumindest bereichsweise in der Art eines mattenartigen Filtermantels umgibt, der aus einzelnen Fasern zusammengesetzt wird, wobei zur Bildung der einzelnen Fasern ein fester Grundwerkstoff in eine Schmelze überführt wird, die über mindestens eine Düseneinrichtung unter Zusatz eines fluidischen Trägerstromes in gerichteter Faserform auf das erste Filtermedium derart aufgespritzt oder aufgesprüht wird, dass die einzelnen Fasern sich zumindest nach dem Berühren mit dem ersten Filtermedium unter Bildung des Filtermantels verfestigen und dass für einen sukzessiven Mattenaufbau des zweiten Filtermediums während des Faserauftrages die jeweilige Düseneinrichtung und das plissierte erste Filtermedium eine Relativbewegung zueinander ausführen und/oder dass die Düseneinrichtung in vorgebbaren Sprüh- oder Spritzrichtungen den Faserauftrag entlang der Außenkontur des ersten Filtermediums vornimmt, und wobei die Fasern flächig in einer vorgebbaren Schichtdicke unter Bildung eines Filtermantels auf das erste Filtermedium aufgetragen werden.

Ein Filterelement mit einem ersten Filtermedium in Form eines Filtermaterials, das sternförmig gefaltet einzelne Filterfalten aufweist, und einem zweiten Filtermedium in Form eines Stützmittels ist aus DE 10 2005 014 360 A1 bekannt geworden. Das Stützmittel erstreckt sich zumindest teilweise in den Abstand zweier benachbarter Filterfalten und/oder innenumfangsseitig und/oder außenumfangsseitig zu den Filterfalten und ist fluiddurchlässig ausgebildet. Das jeweilige Stützmittel ist mit filteraktiven Substanzen versehen oder selbst aus diesen filteraktiven Substanzen aufgebaut, so dass das zweite Filtermedium zur Reduzierung des Standzeit vermindernden Einflusses von Fluidbestandteilen dient, wie spezifische Alterungsprodukte oder sonstige das Fluid schädigende Medien.

Die genannten filteraktiven Substanzen dienen als eine Art Partikelfresser und können beispielsweise in der Einbindung mit einem schaumartigen Körper als Stützmittel, welches die Filterfalten in Position hält, eine Migration der schädigenden Stoffe auf die Reinseite des Filterelements verhindern. Das Stützmittel wird aus einer porösen, insbesondere schwammartigen Grundstruktur als Basismatrix ausgebildet, wobei aufgrund der Eigenelastizität der Grundstruktur die äußeren Filterfalten in das Schaummaterial eingreifen und konvex vorstehende Vorsprünge des Stützmittels in die bestehenden Abstände zwischen benachbarten Filterfalten des Filtermaterials eingreifen. Das Stützmittel kann aus sogenannten Bikomponentenfasersystemen mittels eines Schmelzverfahrens aufgebaut werden. Das Stützmittel bzw. zweite Filtermedium wird unabhängig vom gefalteten Filtermaterial bzw. dem ersten Filtermedium gefertigt und anschließend um dieses angeordnet. Das Stützmittel besteht in Form einer Matrix aus selbstbindenden Kunststoff- und/oder Naturfasern, die zumindest teilweise fibrilliert sind.

Ein Verfahren zur Herstellung eines Filterelements mit einem Filtermedium, welches zumindest in einem Flächenbereich aufeinanderfolgende. Falten aufweist, ist in DE 602 11 579 T2 offenbart. In dem bekannten Verfahren wird durch Ablegen von gesponnenen Fasern in einem halb geschmolzenen Zustand auf einer Form ein Filter ausgebildet, wobei der Filter die Form eines Filterbauteils umfaßt, die Form eine Filterabschnittformfläche zum Formen eines Filterabschnitts und einen die Filterabschnittsformfläche einfassenden Rahmen umfaßt. Hierbei wird der Vliesstoff in Form der Fasern mit einer im Wesentlichen konstanten Dicke auf dem Formabschnitt abgelegt, so dass der entsprechende Filterabschnitt des Filters aus dem Vliesstoff, d.h., den Fasern und dem Gitter des Formabschnitts gebildet wird. Die auf dem Rahmen und dem Gitter des Formabschnitts abgelegten Fasern verschmelzen miteinander, wodurch der Vliesstoff erhalten wird und die durch Falten charakterisierte Kontur des Filterbauteils ausgebildet wird. Die Form des Gitters kann eine Faltenbalgform oder die Form einer Sinuskurve aufweisen. Aus dem Rahmen hinausragende Fasern werden in Richtung Innenseite des Rahmens gefaltet und am Rahmen befestigt.

WO 2009/088647 A1 betrifft ein Verfahren zur Herstellung eines Filterelements mit einem zweilagigen Filtermedium. Das Fluidfiltermedium weist eine erste Lage aus einen mittleren Durchmesser von wenigstens 1µm aufweisenden Mikrofasern und eine zweite Lage aus einen mittleren Durchmesser kleiner als 1 µm aufweisenden Submikrofasern auf, wobei wenigstens eine der Fasergruppen orientiert ist und die beiden Lagen aneinanderliegen. Bei der Herstellung werden beide Lagen zunächst unabhängig voneinander gefertigt, insbesondere mit der gewünschten Orientierung der Fasern versehen, und anschließend aneinandergelegt. Das Fluidfiltermedium kann rohrzylinderförmig mit konzentrisch angeordneten Filterlagen ausgebildet sein. Die zweite, insbesondere innenliegende Lage kann sternförmig aufgefaltet sein.

DE 101 09 474 C1 schlägt ein Verfahren zur Herstellung von Vliesstoffen vor, bei dem Nano- und/oder Mikrofasern durch ein elektrostatisches Spinnverfahren aus einer Polymerschmelze oder einer Polymerlösung erzeugt und zu einem Vlies abgelegt werden, wobei ein bahnförmiges Trägermaterial zwischen wenigstens zwei als Elektroden zur Erzeugung eines elektrischen Feldes ausgebildeten Absprüheinrichtung angeordnet ist oder hindurchgeführt wird und jede Seite des Trägermaterials mit den mittels der Absprüheinrichtungen erzeugen Nano- und/oder Mikrofasern mit entgegengesetzter Polarität beschichtet wird. Ein nach diesem Verfahren hergestellter Vliesstoff kann als Filtermaterial verwendet werden.

Bei Systemen und Anlagen, bei denen Fluide als Betriebsmittel angewandt werden, hängt die Betriebssicherheit in starkem Maße von der einwandfreien Beschaffenheit der betreffenden Fluide ab. Insbesondere bei höherwertigen Anlagen ist es daher auch aus wirtschaftlichen Gründen heraus erforderlich, für die in Frage kommenden Medien, seien es gasförmige Medien oder Fluide, geeignete Filtervorrichtungen vorzusehen, um im Betrieb auftretende Verunreinigungen zu beseitigen. Wenn betreffende Betriebsfluide, wie Schmieröle, Kraftstoffe und Hydraulikflüssigkeiten, aber auch Prozeßwässer sowie Luftströme mit Verunreinigungen belastet sind, die kolloidale oder als Feststoffpartikel vorliegende Verunreinigungen enthalten, sind an die Effizienz der Filtervorrichtungen besonders hohe Anforderungen zu stellen.

Es ist allgemein bekannt, bei gattungsgemäß hergestellten Filterelementen aus verschiedenen Filtermaterialien zusammengesetzte, mit zumindest in Flächenbereichen gefaltete oder plissierte Filtermatten zu verwenden, die um ein massives, im Inneren des Filterelementes angeordnetes, mit Durchlässen versehenes Stützrohr herumgelegt sind und die als Schutz vor Beschädigungen von außen in ein feinmaschiges Drahtgewebe eingefaßt sind, das dem Faltenverlauf der Filtermatte folgt. Die Verbindung der Filtermatte mit dem angesprochenen Drahtgewebe ist aufwendig und damit teuer und darüber hinaus ist die Filtermatte vor Beschädigungen nicht vollständig geschützt. Das bekannte Drahtgewebe kann nur geringe Kräfte aufnehmen, so dass es zu einem eventuellen Aufblähen und Unbrauchbarwerden des Filterelementes kommen kann, sobald sich die Anströmrichtung, beispielsweise bei einem Rückströmvorgang von innen nach außen, umkehrt. Da das Drahtgewebe unmittelbar in Kontakt ist mit der äußeren Schicht der Filtermatte, ist hierfür ein resistentes Filtermaterial zu wählen, um zu vermeiden, dass es zu Beschädigungen der Filtermatte kommt, wobei jedoch dieses resistente Material nicht über derart gute Durchlauf- und Filtriereigenschaften verfügt, wie beispielsweise empfindliche Filtermaterialien aus Polyester-, Glasfaser- oder Papiervlies.

Auch ist es wünschenswert, dem plissierten Filtermedium ein Vorfiltermedium vorzuschalten. Dies ist unter Verwendung solcher Drahtgewebe mit relativ großer Maschenweite nur sehr begrenzt möglich und es besteht die Gefahr, dass beispielsweise auch Metallspäne und sonstige Verschmutzungen das empfindliche Filtermaterial beschädigen und die Filtrierleistungen wesentlich beeinträchtigen können. Aus der WO 01/37969 ist es bekannt, ein Festlegeband, beispielsweise in Form eines Klebebandes, um das plissierte Filtermedium herumzulegen, um dergestalt die einzelnen Filterfalten in ihrem vorgebbaren Abstand zueinander zu stabilisieren und festzulegen, um dergestalt die für eine Filtration notwendige volle Filterfläche beizubehalten. Eine Vorfiltration ist mit dieser bekannten Lösung allerdings nicht möglich.

Durch die EP 1 149 620 A2 ist ein Filtermedium bekannt, bei dem auf einer ersten Lage mit einem Melt-blown-Verfahren Fasern einer zweiten Lage aufgebracht werden. Die erste Lage kann auch gefaltet sein, wobei in den Faltenzwischenräumen Aktivkohle angeordnet wird, die dann durch die zweite Lage eingeschlossen wird.

Die US 2007/0131235 A1 beschreibt ein Extrusionsverfahren zum Auftragen von Fasern eines Filterelements mit vorbestimmten Eigenschaften. Ausgehend von diesem Stand der Technik liegt der Erfindung die Aufgabe zugrunde, ein kostengünstiges, geeignetes Verfahren zum Herstellen eines Filterelementes mit einem Filtermedium bereitzustellen, welches zumindest in einem Flächenbereich aufeinanderfolgende Falten aufweist und auf einfache Weise bei allen betrieblichen Anforderungen in seiner Lage fixiert ist und/oder mit dem zumindest eine Vorfiltration realisierbar ist.

Erfindungsgemäß ist diese Aufgabe durch ein Verfahren mit den Merkmalen des Patentanspruches 1 in seiner Gesamtheit gelöst.

Der Filtermantel schrumpft erfindungsgemäß nach seinem Auftrag auf das erste Filtermedium im Durchmesser. Der erfindungsgemäße An- oder Auftrag von einzelnen Fasern, verbunden mit einem stoff- und/oder form-und/oder kraftschlüssigen in Anlage bringen der Einzelfasern mit den Filterfalten des Filtermediums eignet sich hervorragend zur Stabilisierung der einzelnen Filterfalten, insbesondere von in axialer Richtung ausgerichteten Filterfalten, bei zylinderförmigen und ovalen Filterelementen. Sofern die einzelnen Filterfalten in ihrer Lage durch die einzelnen Fasern in stabilisierender Weise gehalten sind, können diese während des Filtrationsvorganges nicht ungewollt miteinander in Anlage kommen, was die wirksame Filterfläche ansonsten verringern würde. Demgemäß dient ein erfindungsgemäß hergestelltes Filterelement auch dazu, die angestrebte Filterleistung konstant beizubehalten.

Dadurch, dass zur Bildung der einzelnen Fasern ein fester Grundwerkstoff in eine Schmelze überführt wird, die über mindestens eine Düseneinrichtung unter Zusatz eines fluidischen Trägerstroms in gerichteter Faserform auf das erste Filtermedium derart aufgespritzt oder aufgesprüht wird, dass die einzelnen Fasern sich zumindest nach dem Berühren mit dem ersten Filtermedium unter Bildung des Filtermantels verfestigen und dass für einen sukzessiven Mantelaufbau des zweiten Filtermediums während des Faserauftrages die jeweilige Düseneinrichtung und das plissierte erste Filtermedium eine Relativbewegung zueinander ausführen und/oder dass die Düseneinrichtung in vorgebbaren Sprüh- oder Spritzeinrichtungen den Faserauftrag entlang der Außenkontur des ersten Filtermediums vornimmt, ist eine Herstellung technisch einfacher Art der Anordnung und Aufbringung eines das erste Filtermedium mit seinen Filterfalten in jedweder Betriebsphase stabilisierenden Faserverbundes geschaffen.

Vorteilhafterweise werden die Fasern derart auf das Filtermedium aufgebracht, dass die aufgebrachten Fasern die Falten in ihrer Position halten und/oder eine Vor- oder Nachfilterstufe für das Filtermedium ausbilden. Die Fasern können unter Bildung zumindest eines Faser-Materialstegs zwischen den Falten aufgebracht werden und auf diese Weise die Falten im Betrieb des Filterelements in ihrer Position halten.

Indem die Fasern vorzugsweise über die gesamte, die wirksame Filterfläche des Filterelementes definierende Oberfläche des Filtermediums aufgebracht werden, ist zudem in Abhängigkeit der Durchströmungsrichtung des Filtermediums eine wirksame Vor- oder Nachfilterstufe geschaffen. Die Filterstärke der derart gebildeten Vor- oder Nachfilterstufe läßt sich in nahezu beliebiger Weise durch die aufgebrachte Schichtdicke der einzelnen Fasern stufenlos einstellen. Selbst eine über die Oberfläche des Filtermediums variierende Schichtdicke ist durch die erfindungsgemäße Aufbringung von Fasern auf das Filtermedium ermöglicht. Auf diese Art und Weise ist eine kostengünstige, an die jeweiligen Kundenwünsche angepaßte Herstellung eines Filterelementes mit äußerst widerstandsfähigem Aufbau, insbesondere bezogen auf seine Anströmseite, geschaffen.

Durch die konstruktiv in einem weiten Bereich frei wählbare Ausrichtung der Fasern auf dem Filtermedium und relativ zu den Filterfalten können individuell dem jeweiligen Einsatzzweck und den Strömungsverhältnissen angepaßt, insbesondere auf der Anströmseite des Filterelementes und im Hinblick auf die dort herrschenden Kräfteverhältnisse, optimierte Filterelemente hergestellt werden.

Es kann aber auch auf die Faltenfixierung verzichtet werden und die aufgebrachten einzelnen Fasern können dann je nach Durchströmungsrichtung des Filterelementes eine Vor- oder Nachfilterstufe ausbilden mit entsprechend geänderten Filterfeinheiten gegenüber der Hauptfilterlage in Form des Filtermediums mit den Filterfalten. Auch ist es möglich, in Durchströmungsrichtung des Filtermediums gesehen, den Filterfalten eine Vorfilterstufe vorzulagern sowie auf der gegenüberliegenden Seite eine Nachfilterstufe mit den Einzelfasern anzuschließen. Dergestalt ließe sich in Durchströmungsrichtung des zu filtrierenden Mediums gesehen, ausgehend von einer Grobfiltration der Vorfilterstufe, eine Hauptfiltration durch das Filtermedium mit den Filterfalten nachschalten und danach über die Nachfilterstufe eine Feinfiltration vornehmen. Insoweit läßt sich über die Einzelfasern eine Selektivität des gesamten Filterelementes frei wählen, wobei die einzelnen Fasern derart zueinander anzuordnen sind, dass jedenfalls fluiddurchlässige Zwischenräume geschaffen sind, die dem Medien- oder Fluiddurchtritt dienen.

Als besonders vorteilhaft hat es sich erwiesen, bei einem Herstellverfahren die Fasern, während einer Rotationsbewegung um eine Längsachse des Filterelementes, an dem Filterelement durch eine hierfür geeignete Vorrichtung aufzubringen und dergestalt auf das plissierte Filtermedium aufzutragen. Insoweit läßt sich hierdurch der Filtermantel zu Vorfiltrationszwecken ausbilden.

Bei der Wahl eines geeigneten Fasermaterials, insbesondere in Form eines thermoplastischen Kunststoffes, ist es möglich, die Fasern in einem geschmolzenen oder verflüssigten Zustand des Kunststoffes auf die freien Enden der Filterfalten des Filtermediums von außen her aufzutragen. Nach Abkühlung oder Verfestigung des Fasermaterials kann ein dabei auftretender Schrumpfungsvorgang dazu herangezogen werden, die Fasern nicht nur durch den Stoffschluß an den Kanten und Zwischenräumen der Filterfalten festzulegen, sondern auch durch eine dabei entstehende und bleibende radial wirkende Kraftkomponente der durch den Schrumpfungsvorgang bewirkten Zugkraft. Durch die radial in Bezug auf ein zylinderförmiges, plissiertes Filtermedium gerichtete Kraft ergibt sich ein gewisses Eindringen der Fasern oder des durch die Fasern gebildeten homogenen Filtermantels zwischen die einzelnen Filterfalten. Weiter bedingt dies einen FaserMaterialsteg zwischen den Filterfalten, der einen äußerst widerstandsfähigen Abstandshalter für die Filterfalten darstellt und die Filterfalten in deutlich verbesserter Weise im Vergleich zu den sonst im Stand der Technik bekannten Einrichtungen zur Positionierung und Fixierung von Filterfalten in ihrer Position hält.

Ein weiterer, entscheidender Vorteil eines dahingehend erfindungsgemäß hergestellten Filterelementes ist, dass die Fasern eine nahtlose Schicht oder einen nahtlosen Filtermantel bei vollflächigem Auftrag auf das Filtermedium in der Lage sind zu bilden, da dieser aufgrund ihrer einstellbaren Faserstärke sehr dünn und somit mehrschichtig in der Art eines Endlosauftrages auftragbar sind. Es bedarf insoweit keiner zusätzlichen Verbindungstechnik zu ansonsten vorgesehenen Verbindungen eines Vorfiltermaterials auf die Hauptfilterstufe eines Filterelementes, wie dies teilweise im Stand der Technik aufgezeigt ist.

Zudem ist es dadurch auch möglich, die Filterfeinheit beispielsweise durch die gewählte Faserdichte über die gesamte Wandstärke des Fasermantels zu verändern. Hierbei ist in vorteilhafter Weise vorgesehen, dass der Fasermantel als Vorfilter verwendet wird, wobei ausgehend von der Filterfeinheit des gefalteten Filtermediums von einer hohen Filterfeinheit zu einer geringeren Filterfeinheit nach außen hin diese selektiv verändert wird, wodurch an der jeweils anströmseitigen Oberfläche des Fasermantels größere Partikel abgefiltert werden als beispielsweise in tieferen, dem plissierten Filtermedium näherliegenden Schichten des Fasermantels. Die einzelnen Fasern lassen sich besonders vorteilhaft in einem Winkel zu der Längsachse des zylindrischen Filterelementes oder zu der Längsachse der Falten des Filtermediums von etwa 20° bis 90° anordnen, wobei es zweckmäßig ist, die Fasern von ihrer Längsausrichtung her quer, also in einem Winkel von etwa 90°, zu den Längsachsen der Falten auf das Filtermedium aufzubringen. Besonders vorteilhaft ist es, den Faserverlauf bei mittels eines Wickelvorganges aufgebrachten Fasern derart zu verändern, dass die Fasern beispielsweise sich in ihrer Ausrichtung über die gesamte Schichtdicke des Fasermantels kreuzen. Auch kann es vorteilhaft sein, die Fasern ähnlich einer chaotischen Ausrichtung, wie dies von gepreßten Filtermatten her bekannt ist, anzuordnen.

Die Fasern lassen sich, wie bereits dargelegt, grundsätzlich auf allen Seiten eines Filtermediums auftragen, insbesondere aber auf der Filtrat- und/oder auf der Unfiltratseite eines Filtermediums. Es hat sich in überraschender Weise für einen Durchschnittsfachmann auf diesem Gebiet gezeigt, dass bereits bei kleinen Schichtdicken eines erfindungsgemäßen Faserauftrages etwa ab einer Dicke von 1 mm bis 2 mm bereits eine ausgezeichnete Fixierung von Filterfalten eines Filtermediums erzielbar ist. In Abhängigkeit von dem vorgesehenen Einsatzzweck des Filterelementes kann es durchaus sinnvoll sein, Faserschichtdicken bis etwa 6 mm oder mehr auf dem Filtermedium vorzusehen.

Grundsätzlich ist die Filterfeinheit des Fasermantels frei wählbar; es ist jedoch vorteilhaft, die Filterfeinheit größer zu wählen als bei dem entsprechend mit dem Fasermantel umgebenen Filtermedium, um derart eine sinnvolle Vorfilterstufe in der Art eines Grobfilters für ein gasförmiges oder flüssiges Medium zu erreichen.

In Abhängigkeit von den Stoffeigenschaften des Grundwerkstoffs der Fasern findet bei einem Faserauftrag eine Klebeverbindung mit den Falten des Filtermediums statt, insbesondere eine Klebeverbindung in der Art einer Heißklebung. Letzteres ist insbesondere dann der Fall, wenn der Grundwerkstoff der Fasern zur Verflüssigung und zur Bildung einer Auffächerung in Lamellen unter anschließender Faserbildung erhitzt werden muß.

Der Faserschicht kann zusätzlich zu ihrer mechanischen Filterwirkung eine oder mehrere weitere Funktionen, wie etwa eine definierbare elektrische Polarität, eine chemische und/oder physikalische Präferenz für bestimmte zu filtrierende Stoffe oder dergleichen aufgeprägt werden, indem bestimmte Fasermaterialien gewählt oder gar dem Grundwerkstoff der Fasern entsprechende Additive beigegeben werden, die im Bereich der pharmazeutischen Anwendung auch antibakteriellen Charakter haben können.

Verfahren zur Ausfiltrierung von festen Schwebstoffen aus Fluiden mittels Filtermedien beruhen häufig auf der Anwendung von Filterhilfsstoffen oder -hilfsmitteln, um das regelmäßig auf einer Flüssigkeit basierende FluidGemisch vorzufiltrieren und die Betriebslebensdauer eines Filterelementes zu verlängern. Das erfindungsgemäße Auftragen von Einzelfasern auf ein vordefiniertes Filtermedium eignet sich in besonders idealer Weise, um auf der Oberseite des Fasermantels oder aber auch während des Auftrages der Fasern Filterhilfsstoffe aufzubringen und/oder einzubetten. Durch das dahingehende intrinsische Eintragverfahren läßt sich verhindern, dass eine dicht gepackte Verschmutzungsschicht oder ein Filterkuchen aus festem Material sich auf der Oberfläche des Fasermantels oder Filterelementes absetzen kann, um dergestalt die Wirksamkeit der Hauptfilterstufe in Form des Filtermediums zu beeinträchtigen.

Bei den dahingehenden Absetzvorgängen kann man grundsätzlich zwei Arten von Schwebstoffen unterscheiden, und zwar verformbare und nicht verformbare Schwebstoffe. Filterhilfsmittel arbeiten bei nicht-deformierbaren Schwebstoffen durch Erhöhung der Gesamtporosität und damit der Beladungskapazität des Filtrationssystems. Zusätzlich verlangsamen Filterhilfsstoffe den Durchtritt der nicht-deformierbaren Feststoffe auf der Oberfläche der Filtermedien, wo sie dann ohne weiteres in die Porenstruktur eindringen und den Durchfluß der Flüssigkeit blockieren können. Ferner unterbrechen Filterhilfsmittel die Bildung der gepackten festen Schicht oder des Filterkuchens. Filterhilfsmittel sind bei der Abscheidung nicht-verformbarer Schwebeteilchen im Vergleich zu verformbaren Schwebeteilchen mithin weniger effektiv.

In den Fasermantel lassen sich gestufte Filterbetten, etwa von Glasmikroperlen oder von nicht sphärisch geformten Filterhilfsstoffen, wie etwa poröse Materialien mit geringer Dichte, aufbringen, beispielsweise in Form von Silikaten, Oxyden, Carbonaten, Kieselgel, Polymeren oder sonstigen porösen Stoffen mit niedriger Schüttdichte. Weitere Filterhilfsstoffe können aus Aktivkohle bestehen oder aus lonenaustauscherharzen, antioxidierenden Additiven etc. gebildet sein.

Eine Variante des erfindungsgemäßen Verfahrens zur Herstellung des Filterelementes sieht zumindest folgende weitere Verfahrensschritte vor: Verflüssigen eines etwaig in festem Zustand befindlichen Grundwerkstoffes der Fasern,
Fördern des flüssigen Grundwerkstoffes für die Faserherstellung, vorzugsweise unter Druck in eine Spritz- oder Sprüheinrichtung zur Bildung eines sich in Strahlen oder Lamellen auffächernden Strahls, der unter Dickenreduzierung zu den gewünschten Fasern zerfällt und anschließend auf ein vorpositioniertes Filtermedium oder eine Anzahl von Filtermedien gleichzeitig aufgetragen wird.

Das Spritzverfahren kommt dabei ohne weiteren Eintrag von kinetischer Energie, außer dem hydraulischen Druck, auf den flüssigen Grundwerkstoff für die Fasern aus, während bei einem Sprühverfahren die Aufprägung zusätzlicher kinetischer Energie auf den Flüssigkeitsstrahl erfolgt zur weiteren Auffächerung und Dickenreduktion sowie zum beschleunigten Transport der sich durch Ausrichtung der Moleküle in dem Grundwerkstoff und durch Auskristallisation bildenden Fasern.

Bei einem bevorzugten Verfahren wird dabei ein etwa als Granulat vorliegender Grundwerkstoff für die Fasern erhitzt und verflüssigt und mit einer Extrudereinrichtung zu einer Spritz- oder Sprüheinrichtung, insbesondere zu einer hydraulisch zerstäubenden Düse gefördert und zerstäubt. Die Düse zur Bildung der Fasern kann auch eine Mehrstoffdüse, insbesondere eine einen Trägerluftstrom an die Grundwerkstoffschmelze bringende Zweistoffdüse sein, wobei der flüssige Grundwerkstoff innerhalb des Düsenkörpers oder außerhalb des Düsenkörpers mit dem Trägerluftstrom zum Zweck der Zerstäubung des flüssigen Grundwerkstoffes und des Transports an das Filtermedium zusammengeführt wird.

Als Grundwerkstoff für die Fasern eignen sich vorzugsweise thermoplastische Kunststoffe oder auch duroplastische Ein- oder ZweikomponentenKunststoffe. Ferner können für das Fasermaterial sog. Bikomponentenfasern mit vorgebbarer Stapellänge eingesetzt werden.

Ein besonders bevorzugtes Herstellungsverfahren für einen erfindungsgemäßen Fasermantel ist ein sog. "Spunspray"-Verfahren , bei dem ein fester Grundwerkstoff für die Fasern etwa ein Thermoplast zunächst aus einer vorzugsweisen Granulatform in eine Schmelze überführt wird. Die Schmelze wird durch die Extrudereinrichtung der Zweistoffdüse zugeführt, in deren einem zentralen Kanal die Schmelze förderbar ist. Der zentrale Düsenkanal ist von einem Ringkanal für Trägerluft umgeben, wobei die Trägerluft, die auch erhitzt sein kann, oder ein Heißgas an einer gemeinsamen Austrittsfläche der Düse an den Schmelzstrom geführt werden. Die zunächst insoweit chaotisch in der Schmelze vorliegenden Grundwerkstoff-Moleküle werden dabei ausgerichtet und definieren eine Faserform, die nach dem Berühren an dem Filtermedium kristallisiert und sich unter Schrumpfung verfestigt. Anstelle der Trägerluft als fluidischen Trägerstrom kann auch ein sonstiges Arbeitsgas, wie Stickstoff, aber auch ein flüssiges Medium eingesetzt sein.

Das Filtermedium in Form beispielsweise von zylindrischen, in Längsrichtung gefalteten Filterfalten wird dabei in Rotation gehalten, und zwar in dem Spritz- oder Sprühbereich der Zweistoffdüse, die sich dann in Längsrichtung des Filtermediums hin und her bewegt und dergestalt einen Fasermantel mit sukzessiv zunehmender Schichtdicke auf dem plissierten Filtermedium erzeugt. Auch kann die dahingehende Auftragdüse stillstehen und das Filtermedium gleichzeitig bei seiner Rotation in Längsrichtung sich hin und her bewegen.

Der abgekühlte und besäumte Fasermantel kann mit Bild- oder Schriftzeichen, etwa mit Firmenlogos od. dgl., bedruckt werden. Neben dem Vorteil einer nahtlosen Umspritzung läßt sich für den aufzubringenden Fasermantel der Materialeinsatz, die Schichtdicke sowie die Porosität variabel halten und an Kundenwünsche unmittelbar anpassen. Hierzu trägt auch die vorgebbare funktionale Schichtgebung mit bei und die Spunspray-Lage läßt sich in ihrer Funktionalität steuern, beispielsweise was deren Polarität, die Aktivität der Grenzfläche oder die Einlagerung von Additiven anbelangt. Neben der möglichen Faltenstabilisierung läßt sich dergestalt das erfindungsgemäße Filterelement auch in weitem Rahmen einstellen betreffend die Schmutzaufnahmekapazität, das Durchströmungsverhalten sowie betreffend die Stabilität (Durchflußwechselermüdung).

Insbesondere bei einem Einsatz der Spunspray-Lage als vorgeschaltete Vorfilterstufe und nachgeschaltete Nachfilterstufe in Durchströmungsrichtung des Filtermediums gesehen vor und nach dem Medium angeordnet, läßt sich die gewählte Anordnung als sog. Migrationsbremse nutzen, d.h. Verschmutzungspartikel des Filtermediums selbst durch das jeweils eingesetzte Filtermedienmaterial läßt sich über die nachgeschaltete Spunspray-Lage sicher auffangen und beherrschen, so dass der sonstige Medienkreislauf von dahingehenden internen Verschmutzungsanteilen des Filters verschont bleibt.

Nachstehend ist die Erfindung anhand der Zeichnung näher erläutert. Es zeigen in prinzipieller und nicht maßstäblicher Darstellung die
- Fig. 1: einen teilweisen, schematischen Querschnitt durch ein erfindungsgemäß hergestelltes Filterelement mit Fasermantel;
- Fig. 2: in Draufsicht eine Querschnittsfläche durch ein erfindungsgemäß hergestelltes Filterelement mit Fasermantel;
- Fig. 3: eine schematische Darstellung einer Vorrichtung zur Durchführung eines erfindungsgemäßen Verfahrens zum Herstellen des Filterelementes,
- Fig. 4: einen schematischen Querschnitt durch eine Zweistoffdüse zur Erzeugung und zum Auftrag von Fasern auf das Filtermedium des Filterelements;
- Fig. 5: eine schematische Darstellung der Strahleinschnürung einer aus der Zweistoffdüse in Fig. 4 austretenden Schmelze des Grundwerkstoffes der Fasern unter dem Einfluß eines Trägerluftstromes; und
- Fig. 6: eine schematische Darstellung der zunehmenden Ausrichtung der Moleküle in den Grundwerkstoff für die Fasern während und nach der Passage durch die Zweistoffdüse.

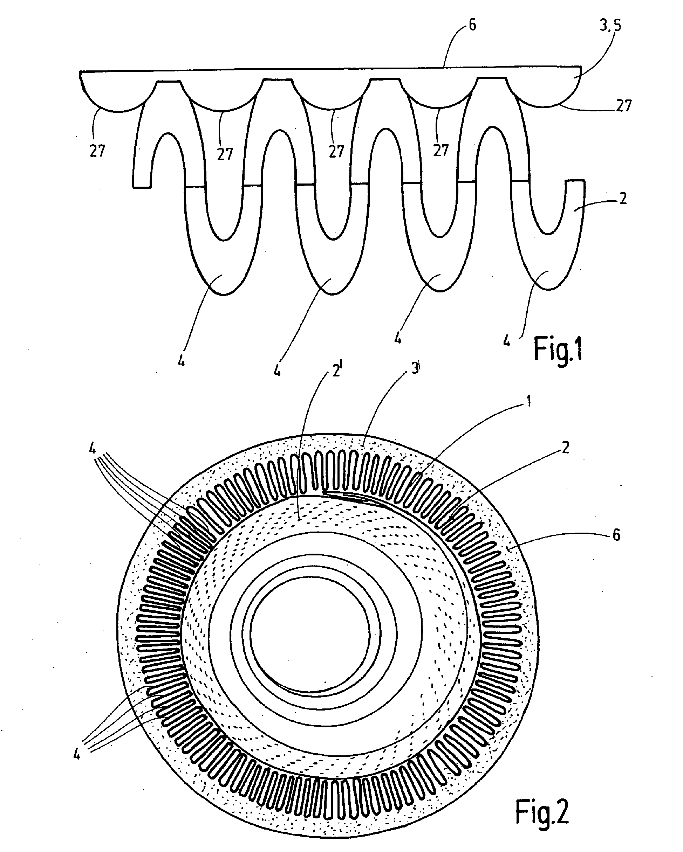

In Fig. 1 ist in einem teilweisen schematisch dargestellten Querschnitt ein plissiertes Filtermedium 2 aus einer üblich aufgebauten Filtermatte gezeigt, das in regelmäßigen Abständen einzelne Falten 4 aufweist, die in einer Art sinusförmigem Verlauf aneinandergereiht sind. Das, ausgehend von der ebenen Lage nach der Fig. 1, zylindrisch gebogene Filtermedium 2 ist Teil eines in Fig. 2 gezeigten zylinderförmigen Filterelementes 1, das zur Filtration eines flüssigen oder gasförmigen Fluids dient. Das Filtermedium 2 ist mehrschichtig aufgebaut und kann in üblicher Weise aus einer Aufeinanderschichtung von mehreren Lagen, beispielsweise gebildet aus Vlies und Faser-Materialien sowie Einzelgeweben gebildet sein. Lochgitterrohre sowie gelochte Streckmetallmäntel dienen insbesondere der Bildung eines innenliegenden Stützrohres 2' für das Filtermedium. Vorzugsweise wird für den Streckmetallmantel oder das Lochgitterrohr ein nichtrostender Stahl oder verzinnter Stahl verwendet; es sind aber auch Kunststoff-Lösungen für die Bildung des inneren Stützrohres 2' möglich. Wie des weiteren die Fig. 2 zeigt, legt sich dabei das Filtermedium 2 mit seinen Faltenkanten innenumfangsseitig an der Außenumfangsseite des Stützrohres 2' an. Das Filterelement läßt sich dann in üblicher Weise mit einem Stützrohr und zwei Endkappen versehen als handelbare Filtereinrichtung in übliche Filtergehäuse (nicht dargestellt) austauschbar einsetzen.

Um nun die Faltenrücken auf der Außenseite des Filtermediums 2, die in Fig. 1 am oberen Rand der Falten 4 des Filtermediums 2 sich befinden, wobei die Außenseite im vorliegenden Fall die Anströmseite von Unfiltrat für das Filterelement 1 darstellt, in ihrer Lage auch bei hoher Belastung durch Strömungskräfte des anströmenden Fluidmediums zu stabilieren, ist eine Faserschicht auf einen Flächenbereich 3 des Filtermediums 2 aufgebracht. Die Faserschicht ist dabei, wie dies die Fig. 2 zeigt, vollflächig als Fasermantel 6 um die Außenseite des zylinderförmigen Filtermediums 2 in etwa gleichbleibender Schichtdicke herumgelegt.

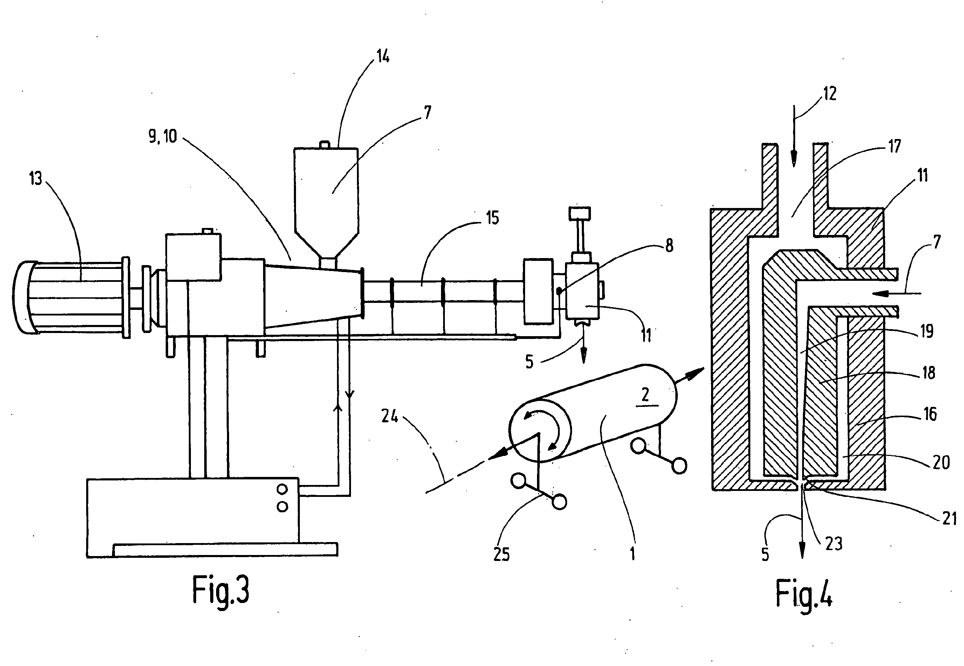

Zur Aufbringung der dahingehend einzelnen Fasern 5 des Fasermantels 6 dient ein, bezogen auf die Fig. 3 schematisch dargestelltes Auftragverfahren sowie eine Vorrichtung, die im wesentlichen aus einer Extrudereinrichtung 9 mit integrierter Heizeinrichtung 10 besteht, sowie eine Spritz- oder Sprüheinrichtung 8 in Form einer Zweistoffdüse 11 (vgl. Fig. 4) aufweist.

Bei den gezeigten Ausführungsbeispielen gelangt vorzugsweise ein als thermoplastischer Kunststoff ausgebildeter Grundwerkstoff 7 für die Herstellung der Fasern 5 zur Anwendung, wobei das Granulat von der von einem drehzahlsteuerbaren Elektromotor 13 angetriebenen Extrudereinrichtung 9 zugeführt wird. Das Kunststoff-Granulat wird hierzu in einem Vorratsbehälter 14 mit trichterförmigem Boden vorgehalten und mittels der Heiz- oder Schmelzeinrichtung 10 verflüssigt, beispielsweise bei einer Temperatur von etwa 190°C. In einem bei Extruderanlagen üblichen Schneckenkanal 15 gelangt die Kunststoffschmelze dann unter weiterer Erhitzung auf bis zu 285°C und Verringerung ihrer Viskosität nebst unter Zunahme von Druck bis auf etwa 35 bar, an die als Zweistoffdüse 11, wie in Fig. 4 näher aufgezeigt, gebildete Spritz- und Sprüheinrichtung 8. Der dargestellte Verfahrensprozeß ist vorzugsweise kontinuierlich ausgeführt; kann aber auch mit vorgegebenen Unterbrechungen diskontinuierlich ausgeführt werden. Fig. 4 zeigt einen schematisch gezeichneten Längsschnitt durch die Zweistoffdüse 11 zur Bildung von Fasern 5 zwecks Auftrag auf das in Fig. 3 schematisch dargestellte zylindrische Filterelement 1, wie es in einer Querschnittdarstellung näher in Fig. 2 dargestellt ist.

Die Zweistoffdüse 11 dient grundsätzlich zum Vermischen oder Zusammenführen eines heißen Trägerluftstromes 12 und der Kunststoffschmelze des Grundwerkstoffes 7. Dazu ist die Zweistoffdüse 11 aus einem zylindrischen ersten und äußeren Düsenkörper 16 gebildet, der einen oberen Zutrittsbereich oder eine Zutrittsöffnung 17 für den Trägerluftstrom 12 aufweist. In dem ersten oder äußeren Düsenkörper 16 ist ein zweiter innerer Düsenkörper 18 zentral angeordnet, wobei der zweite Düsenkörper 18 in seinem Inneren einen Zutrittskanal 19 für den flüssigen Grundwerkstoff 7 aufweist. Der Grundwerkstoff 7 tritt in den Zutrittskanal 19 mit einem Druck von etwa 35 bar und einer Temperatur von etwa 280°C von der Extrudereinrichtung 9 und dem Schneckenkanal 15 kommend in den inneren Düsenkörper 18 ein. Hierfür weist der Düsenkörper 18 eine sich in konisch spitzem Winkel verengende Kanalführung auf, wobei der konisch sich verengende düsenartige Zutrittskanal 19 sich um ein Mehrfaches des Durchmessers des Blasluftkanals 20 verengt. Der Zutrittskanal 19 weist an seinem freien unteren Ende eine Austrittsöffnung 21 mit kegelartigem Rand auf, wobei er in eine Austrittsöffnung 23 des ersten Düsenkörpers 16 ragt. Der erste Düsenkörper 16 umschließt insoweit den zweiten Düsenkörper 18 mit radialem und axialem Abstand unter Bildung des Blasluftkanals 20 vollumfänglich. Die beiden benachbart liegenden Austrittsöffnungen 21 und 23 sind insoweit koaxial zu den Längsachsen der betreffenden Düsenkörper 18 bzw. 16 angeordnet. Die Austrittsöffnung 21 mit ihrem Rand des inneren Düsenkörpers 18 ist derart von der Austrittsöffnung 23 des äußeren Düsenkörpers 16 beabstandet, dass sich ein verringerter Ausströmquerschnitt für den Trägerluftstrom 12 und somit eine Beschleunigung im Austrittsbereich des flüssigen Grundwerkstoffes 7 ergibt.

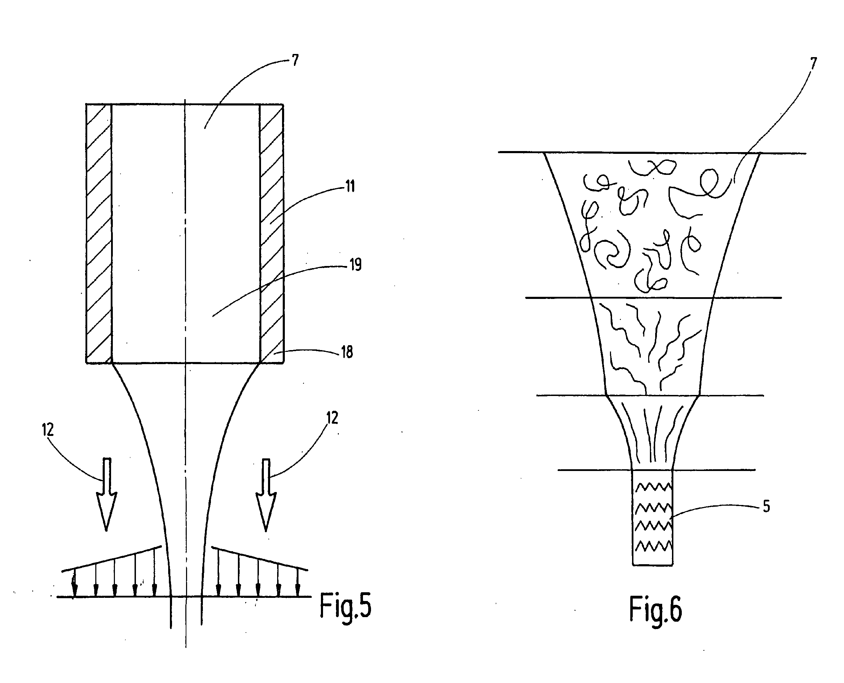

Die Wirkung des sich beschleunigenden Trägerluftstroms 12 beim Verlassen der Zweistoffdüse 11 verdeutlicht die Fig. 5, wobei sich eine Strahleinschnürung der Kunststoffschmelze ergibt und, wie insbesondere die Fig. 6 zeigt, erfolgt eine sukzessive Ausrichtung der zunächst chaotisch vorliegenden Moleküle des Grundwerkstoffes 7 im Sprühstrahl bei der Bildung der jeweiligen Faser 5. Hierdurch ergibt sich eine durch innere Molekülanordnung stabilisierte Faserstruktur mit sehr niedrigen, optischen Doppelbrechungswerten.

Wie die Fig. 3 des weiteren zeigt, ist zum gleichmäßigen Auftrag der aus der Zweistoffdüse 11 sich bildenden Fasern 5 für den dahingehenden Faserauftrag das vorgesehene Filterelement 1 mit seiner Außenseite des Filtermediums 2 derart in einer prinzipiell dargestellten Vorrichtung 25 eingesetzt, dass es unter Rotation gemäß dem angegebenen Doppelpfeil um seine Längsachse 24 im Bereich der Zweistoffdüse 11 verfahren werden kann, wodurch ein gleichmäßiger Auftrag von Fasern 5 aber auch ein spezifisch in seiner Massenverteilung der Fasern 5 gesteuerter Auftrag von diesen Fasern 5 auf das gefaltete Filtermedium 2 erfolgen kann. Hierbei kann das Filterelement 1 auch in Richtung der abgewandten Pfeile koaxial zu seiner Längsachse 24 mittels der Vorrichtung 25 die Rotationsbewegung überlagernd verfahren werden.

Wie die Fig. 1 des weiteren verdeutlicht, kann dadurch ein in beliebiger Filterfeinheit definierter Fasermantel 6 auf die Faltenkanten des plissierten Filtermediums 2 aufgetragen werden. Der heiß aufgetragene, die Fasern 5 bildende Grundwerkstoff 7 gelangt hierbei auch zwischen die Falten 4, wobei eine Massenkonzentration zwischen den Falten 4 in vorgebbarem Umfang möglich sein kann. Der Grundwerkstoff 7 hat in seiner erhitzten, als Schmelze vorliegenden Form eine klebrige Oberfläche und vermag sich unter Umständen und in Abhängigkeit des verwendeten Materials des Filtermediums 2 auch stoffschlüssig mit den Faltenkanten oder Faltenrücken des Filtermediums 2 zu verbinden.

Zudem tritt bei Abkühlung des Grundwerkstoffs 7 ein Schrumpfungsprozeß der Fasern 5 und des aus diesen gebildeten Fasermantels 6 ein, der bei einem im Querschnitt endlosen, ein Filtermedium 2 umschließenden und insbesondere ein zylindrisches Filtermedium 2 umschließenden Filtermantels 6 dazu führt, dass eine Querkraft in radialer Richtung zu der Längsachse 24 oder zu einem Innenraum des Filterelements 1 gerichtet wird, wodurch eine zumindest sichere kraftschlüssige Anlage der Fasern 5 an den Falten 4 ermöglicht ist.

Wie die Fig. 1 des weiteren verdeutlicht, bilden sich zwischen den Falten 4 durch Einbuchtungen der Fasern 5 als Abstandshalter 27 wirkende Ansammlungen von Grundwerkstoff 7. Auf diese Art und Weise ist eine auch unter Betriebsbedingungen des Filterelementes 1, die eine hohe mechanische Beanspruchung bedingen, eine sichere Festlegung und ein Schutz der Falten 4 des Filtermediums 2 erreicht. Bei den gezeigten Ausführungsbeispielen sind die Fasern 5 in etwa quer zu der Längsausrichtung der Falten und mithin quer zur Längsachse 24 des Filterelementes 1 ausgerichtet. Insbesondere ein Faserauftrag mit wechselnder Faserauftragsrichtung ist aber hier als besonders vorteilhaft anzusehen, da die dahingehende Lösung zu hohen Berst- und Kollapsdruckfestigkeiten für das gesamte Filterelement fü h rt.

## Patentansprüche

1. Verfahren zur Herstellung eines zylinderförmigen oder ovalen Filterelements (1), bestehend aus einem ersten Filtermedium (2), das einzelne Filterfalten (4) aufweist, und einem zweiten Filtermedium, das die Filterfalten (4) zumindest bereichsweise in der Art eines mattenartigen Filtermantels (6) umgibt, der aus einzelnen Fasern (5) zusammengesetzt wird, wobei zur Bildung der einzelnen Fasern (5) ein fester Grundwerkstoff in eine Schmelze überführt wird, die über mindestens eine Düseneinrichtung (8) unter Zusatz eines fluidischen Trägerstromes in gerichteter Faserform auf das erste Filtermedium (2) derart aufgespritzt oder aufgesprüht wird, dass die einzelnen Fasern (5) sich zumindest nach dem Berühren mit dem ersten Filtermedium (2) unter Bildung des Filtermantels (6) verfestigen und dass für einen sukzessiven Mattenaufbau des zweiten Filtermediums (6) während des Faserauftrages die jeweilige Düseneinrichtung (8) und das plissierte erste Filtermedium (2) eine Relativbewegung zueinander ausführen und/oder dass die Düseneinrichtung (8) in vorgebbaren Sprüh- oder Spritzrichtungen den Faserauftrag entlang der Außenkontur des ersten Filtermediums (2) vornimmt, und wobei die Fasern (5) flächig in einer vorgebbaren Schichtdicke unter Bildung eines Filtermantels (6) auf das erste Filtermedium (2) aufgetragen werden, **dadurch gekennzeichnet, dass** der Filtermantel (6) nach seinem Auftrag auf das erste Filtermedium (2) im Durchmesser schrumpft.

2. Verfahren nach Anspruch 1, **dadurch gekennzeichnet, dass** die Fasern (5) derart auf das erste Filtermedium (2) aufgebracht werden, dass die aufgebrachten Fasern (5) die Falten (4) in ihrer Position halten und/oder eine Vor- oder Nachfilterstufe für das Filtermedium (2) ausbilden.

3. Verfahren nach Anspruch 1 oder 2, **dadurch gekennzeichnet, dass** die aufgebrachten Fasern (5) zumindest einen Faser-Materialsteg zwischen den Falten (4) ausbilden.

4. Verfahren nach einem der vorhergehenden Ansprüche, **dadurch gekennzeichnet, dass** die Fasern (5) in einer Schichtdicke von etwa 2 mm bis 6 mm auf das erste Filtermedium (2) aufgebracht werden.

5. Verfahren nach einem der vorhergehenden Ansprüche, **dadurch gekennzeichnet, dass** für die Schicht der das zweite Filtermedium (6) bildenden Fasern (5) eine geringere oder höhere Filterfeinheit als für das erste Filtermedium (2) gewählt wird unter Bildung der Vor- bzw. Nachfi Iterstufe.

6. Verfahren nach einem der vorhergehenden Ansprüche, **dadurch gekennzeichnet, dass** die Fasern (5) während einer Rotationsbewegung des bevorzugt zylinderförmig ausgebildeten Filterelements (1) auf das erste Filtermedium (2) aufgebracht werden.

7. Verfahren nach einem der vorhergehenden Ansprüche, **dadurch gekennzeichnet, dass** die durch die Fasern (5) gebildete Schicht in Form des Fi Itermantels (6) nahtlos ausgebildet wird.

8. Verfahren nach einem der vorhergehenden Ansprüche, **dadurch gekennzeichnet, dass** die Fasern (5) mit einer höheren Temperatur als der Raumtemperatur auf das erste Filtermedium (2) aufgebracht werden.

9. Verfahren nach einem der vorhergehenden Ansprüche, **dadurch gekennzeichnet, dass** die Ausrichtung der Fasern (5) vorgegeben wird.

10. Verfahren nach Anspruch 9, **dadurch gekennzeichnet, dass** die Fasern (5) etwa 20° bis 90° quer zu den Falten (4) des ersten Filtermediums (2) aufgetragen werden.

11. Verfahren nach einem der vorhergehenden Ansprüche, **dadurch gekennzeichnet, dass** die Fasern (5) auf der Unfiltratseite und/oder der Filtratseite des ersten Filtermediums (2) unter Bildung einer Vor- bzw. Nachfilterstufe aufgebracht werden.

12. Verfahren nach einem der vorhergehenden Ansprüche, **dadurch gekennzeichnet, dass** die Fasern (5) durch eine Klebeverbindung und/oder durch auf die Falten (4) des ersten Filtermediums (2) gerichtete Querkräfte mit den sonstigen Fasern des Filtermediums (2) formschlüssig und/oder kraftschlüssig verbunden werden.

13. Verfahren nach einem der vorhergehenden Ansprüche, **dadurch gekennzeichnet, dass** die Schicht der Fasern (5) Filterhilfsstoffe, wie Silikate, Oxide, Carbonate, Kieselgel, Polymere, Glas, Mikroperlen oder sonstige poröse Stoffe mit niedriger Schüttdichte beinhaltet und/oder mit definierbarer Polarität ausgebildet wird.

14. Verfahren nach einem der vorhergehenden Ansprüche mit zumindest folgenden weiteren Verfahrensschritten:
- Verflüssigen eines Grundwerkstoffes (7) der Fasern (5),
- Fördern des flüssigen Grundwerkstoffes in eine Spritz- oder Sprüheinrichtung (8), und
- Auftragen der Fasern (5) als eine Schicht definierter Stärke auf das erste Filtermedium (2).

15. Verfahren nach Anspruch 14, **dadurch gekennzeichnet, dass** das Verflüssigen und Fördern des Grundwerkstoffes (7) zu der Spritz- oder Sprüheinrichtung (8) durch eine Extrudereinrichtung (9) mit einer Heizeinrichtung (10) erfolgt.

16. Verfahren nach Anspruch 14 oder 15, **dadurch gekennzeichnet, dass** die Spritz- oder Sprüheinrichtung (8) durch eine Zweistoffdüse (11) gebildet wird, die den flüssigen Grundwerkstoff (7) einem Trägerluftstrom (12) aufprägt mit Hilfe dessen die Fasern (5) gebildet, die einzelnen Fasermoleküle gerichtet und die Fasern (5) an das erste Filtermedium (2) angetragen werden.

17. Verfahren nach einem der Ansprüche 6 bis 16, **dadurch gekennzeichnet, dass** das erste Filtermedium (2) während des Auftrags der Fasern (5) in einer Vorrichtung (25) eingespannt wird, die das erste Filtermedium (2) mit einer vorgebbaren Winkelgeschwindigkeit in Rotation versetzt.

18. Verfahren nach einem der vorhergehenden Ansprüche, **dadurch gekennzeichnet, dass** die Fasern (5) in einem Spunspray-Verfahren erzeugt und auf das erste Filtermedium (2) aufgetragen werden.

19. Verfahren nach einem der vorhergehenden Ansprüche, **dadurch gekennzeichnet, dass** das Verfahren ein Besäumen des Fasermantels (6) und ein anschließendes Aufbringen von Bild- oder Schriftzeichen auf den Fasermantel (6) mit umfaßt.

## Claims

1. A method for producing a cylindrical or oval filter element (1) consisting of a first filter medium (2), which has individual filter folds (4), and a second filter medium which surrounds the filter folds (4) at least in some regions in the manner of a mat-like filter jacket (6) that is composed of individual fibres (5), in order to form the individual fibres (5) a solid base material being converted into a melt which is injected or sprayed onto the first filter medium (2) via at least one nozzle device (8) with the addition of a fluidic carrier flow in a directed fibre form such that the individual fibres (5) set at least after coming into contact with the first filter medium (2) such as to form the filter jacket (6), and that for a successive jacket build-up of the second filter medium (6), while applying the fibre the respective nozzle device (8) and the pleated first filter medium (2) execute a movement relative to one another and/or that the nozzle device (8) applies the fibre along the outside contour of the first filter medium (2) in definable spraying or injecting directions, and the fibres (5) being applied two-dimensionally in a definable layer thickness such as to form a filter jacket (6) over the first filter medium (2), **characterised in that** the diameter of the filter jacket (6) shrinks after being applied to the first filter medium (2).

2. The method according to Claim 1, **characterised in that** the fibres (5) are applied to the first filter medium (2) such that the applied fibres (5) keep the folds (4) in their position and/or form a pre-filter or after-filter stage for the filter medium (2).

3. The method according to Claim 1 or 2, **characterised in that** the applied fibres (5) form at least one fibre material web between the folds (4).

4. The method according to any of the preceding claims, **characterised in that** the fibres (5) are applied over the first filter medium (2) in a layer thickness of approximately 2 mm to 6 mm.

5. The method according to any of the preceding claims, **characterised in that** for the layer of fibres (5) forming the second filter medium (6) a filter fineness lower or higher than for the first filter medium (2) is chosen as the pre-filter and the after-filter stage is formed.

6. The method according to any of the preceding claims, **characterised in that** the fibres (5) are applied to the first filter medium (2) during a rotational movement of the preferably cylindrical filter element (1).

7. The method according to any of the preceding claims, **characterised in that** the layer formed by the fibres (5) in the form of the filter jacket (6) is made to be seamless.

8. The method according to any of the preceding claims, **characterised in that** the fibres (5) are applied to the first filter medium (2) at a temperature that is higher than room temperature.

9. The method according to any of the preceding claims, **characterised in that** the alignment of the fibres (5) is stipulated.

10. The method according to Claim 9, **characterised in that** the fibres (5) are applied at approximately 20° to 90° transversely to the folds (4) of the first filter medium (2).

11. The method according to any of the preceding claims, **characterised in that** the fibres (5) are applied to the unfiltered material side and/or the filtrate side of the first filter medium (2) with the formation of a pre-filter and an after-filter stage.

12. The method according to any of the preceding claims, **characterised in that** the fibres (5) are connected with form-fit and/or force-fit to the other fibres of the filter medium (2) by an adhesive bond and/or by transverse forces directed at the folds (4) of the first filter medium (2).

13. The method according to any of the preceding claims, **characterised in that** the layer of fibres (5) contains supplementary filter agents such as silicates, oxides, carbonates, silica gel, polymers, glass, microbeads or other porous substances with low bulk density and/or is formed with a definable polarity.

14. The method according to any of the preceding claims comprising at least the following further procedural steps:
- liquefaction of a base material (7) of the fibres (5),
- delivery of the liquid base material into an injection or spray device (8), and
- application of the fibres (5) as a layer of defined thickness to the first filter medium (2).

15. The method according to Claim 14, **characterised in that** the liquefaction and delivery of the base material (7) to the injection or spray device (8) takes place by means of an extruder device (9) with a heating device (10).

16. The method according to Claim 14 or 15, **characterised in that** the injection or spray device (8) is formed by a twin-component nozzle (11) which forms the fibres (5), the liquid base material (7) impressed onto a carrier air flow (12) using the latter, the individual fibre molecules are directed and the fibres (5) are applied to the first filter medium (2).

17. The method according to any of Claims 6 to 16, **characterised in that** during the application of the fibres (5) the first filter medium (2) is clamped in a device (25) which sets the first filter medium (2) into rotation with a definable angular velocity.

18. The method according to any of the preceding claims, **characterised in that** the fibres (5) are produced in a spunspray method and are applied to the first filter medium (2).

19. The method according to any of the preceding claims, **characterised in that** the method includes the trimming of the fibre jacket (6) and subsequent application of pictures or characters to the fibre jacket (6).

## Revendications

1. Procédé de fabrication d'un élément (1) filtrant ovale ou en forme de cylindre, constitué d'un premier milieu (2) filtrant, qui-a des plis (4) individuels de filtre, et d'un deuxième milieu filtrant, qui entoure les plis (4) de filtre, au moins par endroit, à la manière d'une enveloppe (6) filtrante de type en nappe, qui est composée de fibres (5) individuelles, dans lequel, pour la formation des fibres (5) individuelles, on transforme un matériau de base solide en une masse fondue que l'on projette ou que l'on pulvérise, en une forme de fibre orientée, sur le premier milieu (2) filtrant, par au moins un dispositif (8) à buse avec addition d'un courant porteur fluidique, de manière à consolider les fibres (5) individuelles, au moins après le contact avec le premier milieu (2) filtrant avec formation de l'enveloppe (6) filtrante, et en ce que, pour une formation successive de nappes du deuxième milieu (6) filtrant, pendant le dépôt de fibres, le dispositif (8) de buse respectif et le premier milieu (2) filtrant plissé exécutent un mouvement relatif l'un par rapport à l'autre et/ou en ce que le dispositif (8) de buse effectue, dans des directions de projection ou de pulvérisation pouvant être données à l'avance, le dépôt de fibres le long du contour extérieur du premier milieu (2) filtrant et dans lequel on dépose les fibres (5) sur le premier milieu (2) filtrant en une épaisseur de couche pouvant être donnée à l'avance avec formation d'une enveloppe (6) filtrante, **caractérisée en ce que** l'enveloppe (6) filtrante rétrécit en diamètre après son dépôt sur le premier milieu (2) filtrant.

2. Procédé suivant la revendication 1, **caractérisé en ce que** l'on dépose des fibres (5) sur le premier milieu (2) filtrant, de manière à ce que les fibres (5) déposées maintiennent les plis (4) en leur position et/ou forment un étage de préfiltration ou de post-filtration pour le milieu (2) filtrant.

3. Procédé suivant la revendication 1 ou 2, **caractérisé en ce que** les fibres (5) déposées forment au moins une nervure en matériau en fibres entre les plis (4).

4. Procédé suivant l'une des revendications précédentes, **caractérisé en ce que** l'on dépose les fibres (5) en une épaisseur de couche d'environ 2 mm à 6 mm sur le premier milieu (2) filtrant.

5. Procédé suivant l'une des revendications précédentes, **caractérisé en ce que** l'on choisit, pour la couche des fibres (5) formant le deuxième milieu (6) filtrant, une finesse de filtre plus petite ou plus grande que pour le premier milieu (2) filtrant avec formation de l'étage de préfiltration ou de post-filtration

6. Procédé suivant l'une des revendications précédentes, **caractérisé en ce que** l'on dépose les fibres (5) sur le premier milieu (2) filtrant pendant un mouvement de rotation de l'élément (1) filtrant, constitué de préférence en forme de cylindre.

7. Procédé suivant l'une des revendications précédentes, **caractérisé en ce que** la couche formée par les fibres (5) est formée sans couture sous la forme de l'enveloppe (6) filtrante.

8. Procédé suivant l'une des revendications précédentes, **caractérisé en ce que** l'on dépose les fibres (5) sur le premier milieu (2) filtrant à une température plus haute que la température ambiante.

9. Procédé suivant l'une des revendications précédentes, **caractérisé en ce que** l'on donne à l'avance l'orientation des fibres (5).

10. Procédé suivant la revendication 9, **caractérisé en ce que** l'on dépose les fibres (5) sur le premier milieu (2) filtrant transversalement d'environ 20° à 90° aux plis (4).

11. Procédé suivant l'une des revendications précédentes, **caractérisé en ce que** l'on dépose les fibres (5) du côté où il n'y a pas le filtrat et/ou du côté du filtrat du premier milieu (2) filtrant avec formation d'un étage de préfiltration ou de post-filtration.

12. Procédé suivant l'une des revendications précédentes, **caractérisé en ce que** les fibres (5) sont reliées à complémentarité de forme et/ou à complémentarité de force aux autres fibres du milieu (2) filtrant par un collage et/ou par des forces transversales dirigées sur les plis (4) du premier milieu (2) filtrant.

13. Procédé suivant l'une des revendications précédentes, **caractérisé en ce que** la couche des fibres (5) contient des adjuvants de filtration comme des silicates, des oxydes, des carbonates, du gel de silice, des polymères, du verre, des microperles ou d'autres substances poreuses de petite densité apparente et/ou est constituée en ayant une polarité qui peut être définie.

14. Procédé suivant l'une des revendications précédentes, comprenant au moins les stades de procédé supplémentaires suivants :
- liquéfaction d'un matériau (7) de base des fibres (5),
- transport du matériau de base liquide dans un dispositif (8) de projection ou de pulvérisation, et
- dépôt des fibres (5) sous la forme d'une couche d'épaisseur définie sur le premier milieu (2) filtrant.

15. Procédé suivant la revendication 14, **caractérisé en ce que** la liquéfaction et le transport du matériau (7) de base au dispositif (8) de projection où de pulvérisation s'effectuent par un dispositif (9) d'extrusion ayant un dispositif (10) de chauffage.

16. Procédé suivant la revendication 14 ou 15, **caractérisé en ce que** le dispositif (8) de projection ou de pulvérisation est formé par une buse (11) à deux substances, qui appliquent au matériau (7) de base liquide un courant (12) d'air porteur, à l'aide duquel les fibres (5) sont formées, les diverses molécules de fibres sont dirigées et les fibres (5) sont appliquées sur le premier milieu (2) filtrant.

17. Procédé suivant l'une des revendications 6 à 16, **caractérisé en ce que** l'on serre le premier milieu (2) filtrant, pendant le dépôt des fibres (5), dans un dispositif (25), qui met le premier milieu (2) filtrant en rotation à une vitesse angulaire pouvant être donnée à l'avance.

18. Procédé suivant l'une des revendications précédentes, **caractérisé en ce que** l'on produit les fibres (5) dans un procédé spunspray et on les dépose sur le premier milieu (2) filtrant.

19. Procédé suivant l'une des revendications, précédentes, **caractérisé en ce que** le procédé comprend un rognage de l'enveloppe (6) filtrante et un dépôt venant ensuite de symboles graphiques ou de caractères graphiques sur l'enveloppe (6) de fibres.
